# EUROPÄISCHE PATENTSCHRIFT

(11) **EP 2 336 495 B1**
(45) Veröffentlichungstag und Bekanntmachung des Hinweises auf die Patenterteilung: **07.03.2012**
(21) Anmeldenummer: 09015573.0
(22) Anmeldetag: 16.12.2009
(51) Int. Cl.: F01D 9/02, F01D 9/04, F01D 25/16, F01D 25/24, F02C 6/12

(54) **Abgasturbolader**
Exhaust gas turbo charger
Turbosoufflante de gaz d'échappement

(43) Veröffentlichungstag der Anmeldung: 22.06.2011
(73) Patentinhaber: BorgWarner, Inc., Auburn Hills, MI 48326-2872 (US)
(72) Erfinder: Lischer, Thomas, Dr.-Ing., 67433 Neustadt (DE)
(74) Vertreter: Schmitz, Hans-Werner

(56) Entgegenhaltungen:
- EP-A1- 0 251 125
- EP-A1- 1 394 366
- EP-A1- 2 090 755
- DE-A1-102004 031 739
- DE-A1-102004 031 986
- DE-A1-102007 017 824
- DE-U1-202006 004 407

## Beschreibung

Die Erfindung betrifft einen Abgasturbolader gemäß dem Oberbegriff des Anspruches 1.

Ein derartiger Abgasturbolader ist beispielsweise aus der EP 1 734 231 A1 bekannt. Die Montage des Verdichtergehäuses am Lagergehäuse erfolgt bei einem gattungsgemäßen Turbolader mittels einer Befestigungseinrichtung in Form einer Verschraubung, was einen zeitintensiven Arbeitsschritt darstellt. Denn zum einen ist eine Mehrzahl von Innengewinden vorzusehen und die Verschraubung erfolgt unter Verwendung geeigneter Werkzeuge. Weiterhin zeigt EP 2 090 755 einen Turbolader nach dem Oberbegriff vom Anspruch 1.

Es ist daher Aufgabe der vorliegenden Erfindung, einen Abgasturbolader der im Oberbegriff des Anspruches 1 angegebenen Art zu schaffen, der eine Vereinfachung der Montage des Verdichtergehäuses am Lagergehäuse und eine erhebliche Beschleunigung dieser Montage ermöglicht.

Die Lösung dieser Aufgabe erfolgt durch die Merkmale des Anspruches 1.

Dadurch, dass die erste Befestigungseinrichtung als Steck-Dreh-Verbindungseinrichtung ausgebildet ist, die zur Montage lediglich einen Steckvorgang und einen sich daran anschließenden Drehvorgang zur Verriegelung der beiden Bauteile erfordert, ergibt sich die angestrebte Beschleunigung und Vereinfachung des Montagevorganges, wobei zudem keine Werkzeuge erforderlich sind. Ferner ergibt eine derartige Befestigungseinrichtung die Möglichkeit einer voll maschinellen Montage des Verdichtergehäuses am Lagergehäuse.

Die Unteransprüche haben vorteilhafte Weiterbildungen der Erfindung zum Inhalt.

Die erfindungsgemäße Steck-Dreh-Verbindungseinrichtung ist ähnlich einem Bajonettverschluss aufgebaut und kann zwei Verschlussringe mit entsprechenden Riegelzähnen aufweise, welche am Verdichtergehäuse bzw. Lagergehäuse anbringbar sind.

Hierbei ist es möglich, die Verschlussringe mit ihren Riegelzähnen durch eine Fräs- und Drehbearbeitung aus den Rohteilen des Lagergehäuses bzw. des Verdichtergehäuses herauszuarbeiten.

Zum anderen können die Verschlussringe jedoch auch als separate Teile ausgebildet sein, die nach ihrer Fertigung z.B. über einen Pressverband oder durch Schrumpfen am Lagergehäuse bzw. dem Verdichtergehäuse angebracht werden können.

Im Falle des Verdichtergehäuses ist es vorzugsweise auch möglich, einen direkten Verguss des Verschlussringes mit dem Verdichtergehäuse zu realisieren.

Die erforderliche Pressung zwischen dem Verdichtergehäuse und dem Lagergehäuse kann über eine Auflaufschräge auf der jeweiligen Kontaktfläche der Verzahnung der beiden Hälften erreicht werden.

Bei einer besonders bevorzugten Ausführungsform ist es zur Sicherung des am Lagergehäuse montierten Verdichtergehäuses möglich, einen Sicherungsstift vorzusehen, der entweder mittels Federkraft oder manuell eingepresst werden kann, um ein Lösen der Verbindung zwischen dem Lagergehäuse und dem Verdichtergehäuse zu verhindern. Um einen erfolgreichen Montageprozess überprüfen zu können, kann dieser Sicherungsstift mit einem Indikator ausgestattet sein, um die erfolgreiche Montage anzuzeigen. Hierbei ragt der Indikator bei nicht erfolgter Montage des Sicherungsstiftes aus dem Gehäuse heraus, während er bei erfolgter Montage in das Gehäuse zurückgezogen ist. Diese Art der Anzeige der Montage ist auch maschinell überprüfbar.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine perspektivische, teilweise aufgebrochene Darstellung eines erfindungsgemäßen Abgasturboladers;
- Fig. 2: eine perspektivische Darstellung des Verdichtergehäuses des Abgasturboladers gemäß Fig. 1, das zur Erläuterung der erfindungsgemäßen Prinzipien im am Lagergehäuse montierten Zustand dargestellt ist, wobei das Lagergehäuse als Lagergehäusedummy in stark schematisierter Darstellung sichtbar ist;
- Fig. 3: eine Teilansicht des Verschlussringes des Lagergehäuses; und
- Fig. 4 und 5: zwei Darstellungen eines Sicherungsstiftes mit Indikator zur Anzeige einer erfolgten bzw. einer noch nicht erfolgten Montage.

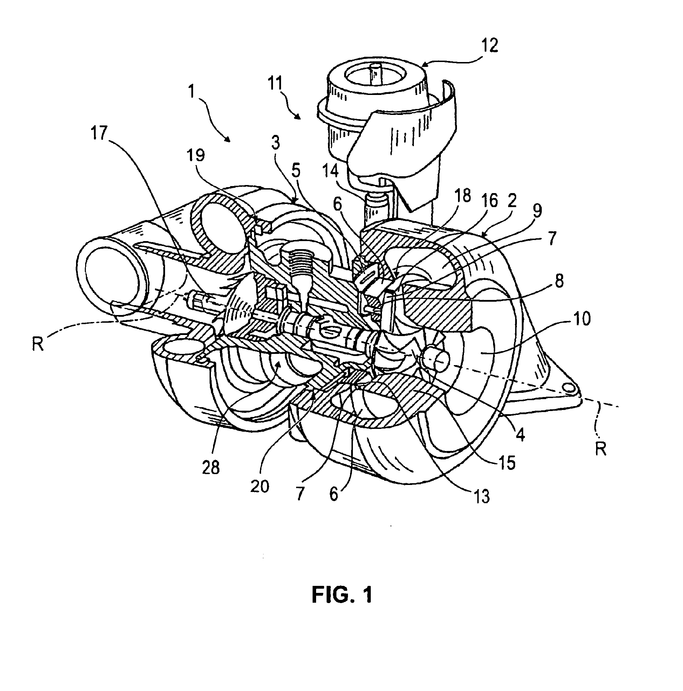

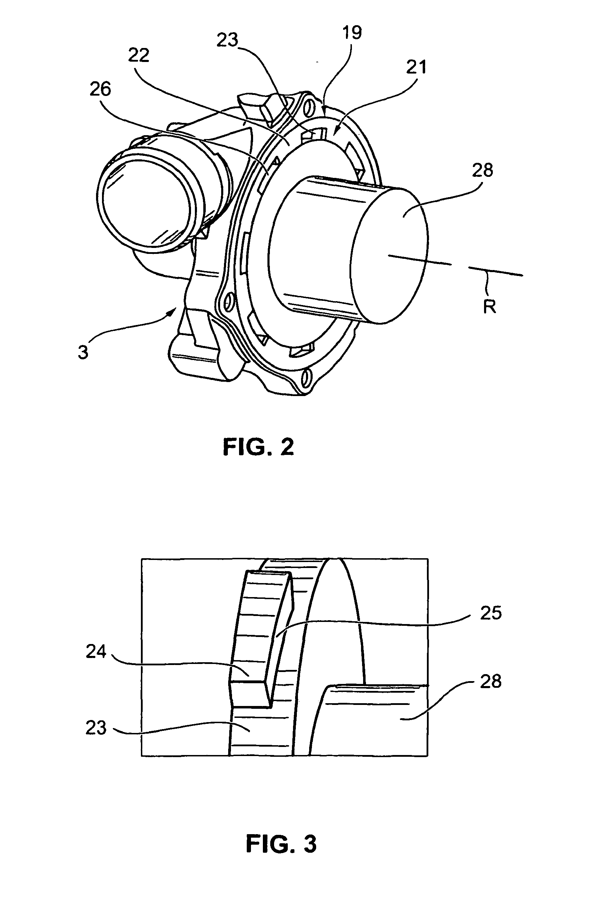

In Fig. 1 ist in aufgebrochener perspektivischer Darstellung eine mögliche Ausführungsform eines erfindungsgemäßen Abgasturboladers 1 dargestellt, der ein Turbinengehäuse 2 und ein Verdichtergehäuse 3 aufweist, die an den jeweils benachbarten Enden eines Lagergehäuses 28 montiert sind. Hierbei ist eine erste Befestigungseinrichtung 19 zur Fixierung des Lagergehäuses 28 am Verdichtergehäuse 3 und eine zweite Befestigungseinrichtung 20 zur Fixierung des Lagergehäuses 28 am Turbinengehäuse 2 jeweils schematisch vereinfacht dargestellt. Der Aufbau der ersten Befestigungseinrichtung 19 wird im Detail anhand der nachfolgenden Fig. 2 bis 5 erläutert werden.

Alle übrigen in Fig. 1 durch die eingezeichneten Bezugsziffern identifizierten Komponenten können der beigefügten Bezugszeichenliste entnommen werden, sind jedoch für die Erläuterung der Prinzipien vorliegender Erfindung von untergeordneter Bedeutung und stellen dementsprechend optionale Komponenten des Abgasturboladers 1 dar, die nicht alle notwendigerweise vorgesehen sein müssen, jedoch vorgesehen sein können, wie sich dies aus Fig. 1 ergibt.

Fig. 2 stellt eine perspektivische Darstellung des Verdichtergehäuses 3 dar, das über die zuvor erwähnte erste Befestigungseinrichtung 19 am Lagergehäuse 28 fixierbar ist, wobei Fig. 2 den fixierten Zustand darstellt. Wie in der Kurzbeschreibung der Figuren erläutert, ist das Lagergehäuse 28 in Form eines zylindrischen Lagergehäusedummys dargestellt, da die konstruktiven Einzelheiten des Lagergehäuses 28 für die Erläuterung vorliegender Erfindung nicht erforderlich sind.

Die Befestigungseinrichtung 19 weist bei der in Fig. 2 dargestellten Ausführungsform einen ersten Verschlussring 21 auf, der am Lagergehäuse 3 fixiert ist. Die Fixierung kann auf die in der Beschreibungseinleitung erläuterten Weisen erfolgen. Der Verschlussring 21 weist eine Mehrzahl erster Riegelzähne auf, von denen ein Riegelzahn mit der Bezugsziffer 22 identifiziert ist. Die Anzahl der Riegelzähne 22 kann variieren und ist an den jeweiligen Abgasturboladertyp anpassbar. Wie sich aus der Fig. 2 ergibt, sind die Riegelzähne 22 beabstandet zueinander angeordnet, so dass sich zwischen den Riegelzähnen 22 Freiräume bzw. Durchtrittsöffnungen 26 ergeben. Wie ferner der Fig. 2 entnommen werden kann, weisen die Riegelzähne 22 nach innen auf die Rotations- bzw. Längsachse R des Abgasturboladers.

Die erste Verbindungseinrichtung 19 weist ferner einen zweiten Verschlussring 23 auf, der am Lagergehäuse 28 in der zuvor erläuterten Art und Weise fixierbar ist. Der zweite Verschlussring 23 weist eine Anzahl von zweiten Riegelzähnen auf, die derjenigen der Anzahl der ersten Riegelzähne 22 entspricht. Da in Fig. 2 der Montagezustand von Lagergehäuse 28 und Verdichtergehäuse 3 dargestellt ist, sind die zweiten Riegelzähne des zweiten Verschlussringes 23 in Fig. 2 nicht sichtbar. Einer dieser zweiten Riegelzähne 24 ist jedoch aus der Darstellung der Fig. 3 ersichtlich. Die Abstände zwischen den zweiten Riegelzähnen 24 entsprechen denjenigen der ersten Riegelzähne 22, so dass die Riegelzähne 24 durch die Durchtrittsöffnungen 26 zur Montage hindurchgesteckt werden können und nach diesem axialen Hindurchstecken zur Festlegung eine Drehbewegung erfolgt, aufgrund der sich die Riegelzähne 22 und 24 hintergreifen. Daher wird die erste Befestigungseinrichtung 19 als Steck-Dreh-Verbindungseinrichtung bezeichnet.

Um die Montage weiter zu erleichtern, ist es möglich, zumindest an einer der Gruppe der Riegelzähne 22 bzw. 24 eine Auflaufschräge 25 anzubringen, die in Fig. 3 an dem Riegelzahn 24 des zweiten Verschlussringes 23 sichtbar ist. Vom Prinzip her ist es jedoch auch möglich, beide Riegelzahngruppen 22 bzw. 24 mit einer derartigen Auflaufschräge 25 zu versehen.

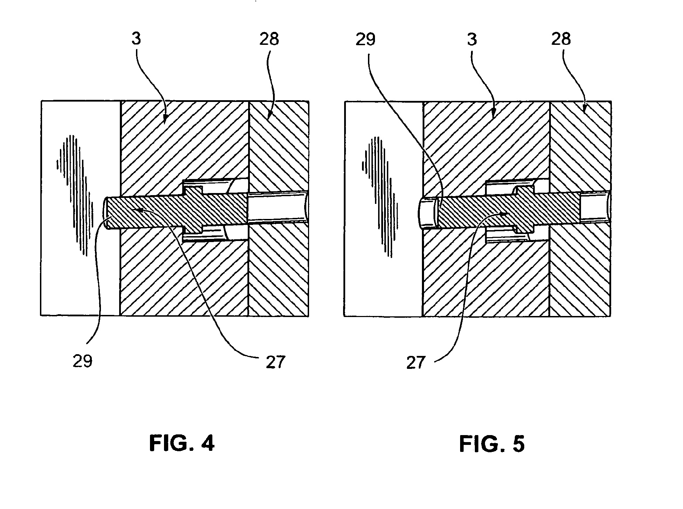

Wie sich aus der voranstehenden Erläuterung der ersten Befestigungseinrichtung 19 ergibt, stellt diese einen Schnell-Verschluss, ähnlich einem Bajonettverschluss, dar und kann zusätzlich mit einem aus den Fig. 4 und 5 ersichtlichen Sicherungsstift 27 versehen werden, der in das Lagergehäuse 28 und das Verdichtergehäuse 3 eingesteckt werden kann und an einem Ende einen Indikator 29 aufweist. Die schematisch stark vereinfachte Darstellung der Fig. 4 stellt hierbei den offenen Zustand dar, in dem der Indikator 29 des Sicherungsstiftes 27 außen angeordnet ist.

Die Fig. 5 stellt die gesicherte Position mit versenktem Sicherungsstift 27 bzw. Indikator 29 dar.

Neben der voranstehenden schriftlichen Offenbarung wird hiermit explizit auf deren zeichnerische Darstellung in den Fig. 1 bis 5 verwiesen.

### Bezugszeichenliste

- 1: Turbolader
- 2: Turbinengehäuse
- 3: Verdichtergehäuse
- 4: Turbinenrotor
- 5: Verstellring bzw. Aufnahmering
- 6: Schaufellagerring
- 7: Leitschaufeln
- 8: Schwenkachsen
- 9: Zuführkanal
- 10: Axialstutzen
- 11 1: Betätigungseinrichtung
- 12: Steuergehäuse
- 13: Freiraum für Leitschaufeln 7
- 14: Stößelglied
- 15: ringförmiger Teil des Turbinengehäuses 2
- 16: Abstandshalter / Distanznocken
- 17: Verdichterrotor
- 18: Leitgitter
- 19: erste Befestigungseinrichtung
- 20: zweite Befestigungseinrichtung
- 21: erster Verschlussring
- 22: erste Riegelzähne
- 23: zweiter Verschlussring
- 24: zweite Riegelzähne
- 25: Auflaufschräge
- 26: Freiräume / Durchtrittsöffnungen
- 27: Sicherungsstift
- 28: Lagergehäuse
- 29: Indikator
- R: Rotationsachse / Längsachse

## Patentansprüche

1. Abgasturbolader (1)
- mit einem Verdichtergehäuse (3),
- mit einem Lagergehäuse (28), das an einem Ende mittels einer ersten Befestigungseinrichtung (19) mit dem Verdichtergehäuse (3) verbindbar ist, und
- mit einem Turbinengehäuse (2), das an dem anderen Ende des Lagergehäuses (28) mit diesem über eine zweite Befestigungseinrichtung (20) verbindbar ist, wobei sich das Verdichtergehäuse (3), das Lagergehäuse (28) und das Turbinengehäuse (2) entlang einer ATL-Längsachse (R) erstrecken,
**dadurch gekennzeichnet,**
- **dass** die erste Befestigungseinrichtung (19) als Steck-Dreh-Verbindungseinrichtung ausgebildet ist.

2. Abgasturbolader nach Anspruch 1, **dadurch gekennzeichnet, dass** die erste Verbindungseinrichtung (19) einen am Verdichtergehäuse (3) angeordneten ersten Verschlussring (21) mit auf die ATL-Längsachse (R) weisenden, beabstandet zueinander angeordneten ersten Riegelzähnen (22), und einen am Lagergehäuse (28) angeordneten, zweiten Verschlussring (23) mit zu den ersten Riegelzähnen (22) komplementären, beabstandet zueinander angeordneten zweiten Riegelzähnen (24) aufweist.

3. Abgasturbolader nach Anspruch 2, **dadurch gekennzeichnet, dass** der erste Verschlussring (21) einstückig mit dem Verdichtergehäuse (3) ausgebildet ist.

4. Abgasturbolader nach Anspruch 2 oder 3, **dadurch gekennzeichnet, dass** der zweite Verschlussring (23) einstückig mit dem Lagergehäuse (28) ausgebildet ist.

5. Abgasturbolader nach Anspruch 3 oder 4, **dadurch gekennzeichnet, dass** der erste und zweite Verschlussring (21 bzw. 23) durch eine Fräs- und Drehbearbeitung aus den Gehäuserohteilen des Verdichtergehäuses (3) bzw. des Lagergehäuses (28) herausgearbeitet ist.

6. Abgasturbolader nach Anspruch 2, **dadurch gekennzeichnet, dass** der erste und der zweite Verschlussring (21, 23) als separate Teile ausgebildet sind, die mit dem Verdichtergehäuse (3) bzw. dem Lagergehäuse (28) verbindbar sind.

7. Abgasturbolader nach einem der Ansprüche 2 bis 6, **dadurch gekennzeichnet, dass** die ersten und/oder zweiten Riegelzähne (22 bzw. 24) mit einer Auflaufschräge (25) versehen sind.

8. Abgasturbolader nach einem der Ansprüche 1 bis 7, **dadurch gekennzeichnet, dass** die erste Befestigungseinrichtung (19) mit einem Sicherungsstift (27) zur Verhinderung der Lösung der Verbindung zwischen Lagergehäuse (28) und Verdichtergehäuse (3) versehen ist.

9. Abgasturbolader nach Anspruch 8, **dadurch gekennzeichnet, dass** der Sicherungsstift (27) mit einem Indikator (29) versehen ist.

10. Abgasturbolader nach einem der Ansprüche 1 bis 9, **dadurch gekennzeichnet, dass** die erste Verbindungseinrichtung (19) nach Art eines Bajonettverschlusses ausgebildet ist.

## Claims

1. Exhaust-gas turbocharger (1),
- having a compressor housing (3),
- having a bearing housing (28) which can be connected at one end to the compressor housing (3) by means of a first fastening device (19), and
- having a turbine housing (2) which can be connected to the bearing housing (28) at the other end of the latter by means of a second fastening device (20), with the compressor housing (3), the bearing housing (28) and the turbine housing (2) extending along an exhaust-gas turbocharger longitudinal axis (R),
**characterized**
- **in that** the first fastening device (19) is designed as a plug-and-twist connecting device.

2. Exhaust-gas turbocharger according to Claim 1, **characterized in that** the first connecting device (19) has a first fastener ring (21) which is arranged on the compressor housing (3) and which has first locking teeth (22) which point toward the exhaust-gas turbocharger longitudinal axis (R) and which are arranged spaced apart from one another, and a second fastener ring (23) which is arranged on the bearing housing (28) and which has second locking teeth (24) which are complementary to the first locking teeth (22) and which are arranged spaced apart from one another.

3. Exhaust-gas turbocharger according to Claim 2, **characterized in that** the first fastener ring (21) is formed in one piece with the compressor housing (3).

4. Exhaust-gas turbocharger according to Claim 2 or 3, **characterized in that** the second fastener ring (23) is formed in one piece with the bearing housing (28).

5. Exhaust-gas turbocharger according to Claim 3 or 4, **characterized in that** the first and second fastener rings (21 and 23) are formed out of the housing blanks of the compressor housing (3) and of the bearing housing (28) respectively by means of a milling and turning process.

6. Exhaust-gas turbocharger according to Claim 2, **characterized in that** the first and second fastener rings (21, 23) are formed as separate parts which can be connected to the compressor housing (3) and to the bearing housing (28) respectively.

7. Exhaust-gas turbocharger according to one of Claims 2 to 6, **characterized in that** the first and/or second locking teeth (22 and/or 24) are provided with a run-on bevel (25).

8. Exhaust-gas turbocharger according to one of Claims 1 to 7, **characterized in that** the first fastening device (19) is provided with a securing pin (27) for preventing the release of the connection between the bearing housing (28) and compressor housing (3).

9. Exhaust-gas turbocharger according to Claim 8, **characterized in that** the securing pin (27) is provided with an indicator (29).

10. Exhaust-gas turbocharger according to one of Claims 1 to 9, **characterized in that** the first connecting device (19) is designed in the manner of a bayonet connection.

## Revendications

1. Turbosoufflante à gaz d'échappement (1), comprenant :
- un boîtier de compresseur (3),
- un boîtier de palier (28), qui peut être connecté à une extrémité au moyen d'un dispositif de fixation (19) au boîtier de compresseur (3),
et
- un boîtier de turbine (2) qui peut être connecté à l'autre extrémité du boîtier de palier (28) à celui-ci par le biais d'un deuxième dispositif de fixation (20), le boîtier de compresseur (3), le boîtier de palier (28) et le boîtier de turbine (2) s'étendant le long d'un axe longitudinal (R) de la turbosoufflante à gaz d'échappement,
**caractérisée en ce que**
- le premier dispositif de fixation (19) est réalisé sous forme de dispositif de connexion enfichable rotatif.

2. Turbosoufflante à gaz d'échappement selon la revendication 1, **caractérisée en ce que** le premier dispositif de connexion (19) présente une première bague de fermeture (21) disposée sur le boîtier de compresseur (3), avec des premières dents de verrouillage (22) tournées vers l'axe (R) de la turbosoufflante à gaz d'échappement et disposées de manière espacée les unes des autres, et une deuxième bague de fermeture (23) disposée sur le boîtier de palier (28), avec des deuxièmes dents de verrouillage (24) disposées de manière espacée les unes des autres et complémentaires aux premières dents de verrouillage (22).

3. Turbosoufflante à gaz d'échappement selon la revendication 2, **caractérisée en ce que** la première bague de fermeture (21) est réalisée d'une seule pièce avec le boîtier de compresseur (3).

4. Turbosoufflante à gaz d'échappement selon la revendication 2 ou 3, **caractérisée en ce que** la deuxième bague de fermeture (23) est réalisée d'une seule pièce avec le boîtier de palier (28).

5. Turbosoufflante à gaz d'échappement selon la revendication 3 ou 4, **caractérisée en ce que** la première et la deuxième bague de fermeture (21, respectivement 23) sont usinées par fraisage et tournage à partir des pièces brutes de boîtier du boîtier de compresseur (3) et du boîtier de palier (28), respectivement.

6. Turbosoufflante à gaz d'échappement selon la revendication 2, **caractérisée en ce que** la première et la deuxième bague de fermeture (21, 23) sont réalisées sous forme de pièces séparées, qui peuvent être connectées au boîtier de compresseur (3) ou au boîtier de palier (28).

7. Turbosoufflante à gaz d'échappement selon l'une quelconque des revendications 2 à 6, **caractérisée en ce que** les premières et/ou deuxièmes dents de verrouillage (22, respectivement 24) sont pourvues d'un biseau d'entrée (25).

8. Turbosoufflante à gaz d'échappement selon l'une quelconque des revendications 1 à 7, **caractérisée en ce que** le premier dispositif de fixation (19) est pourvu d'une goupille de fixation (27) pour empêcher le desserrage de la connexion entre le boîtier de palier (28) et le boîtier de compresseur (3).

9. Turbosoufflante à gaz d'échappement selon la revendication 8, **caractérisée en ce que** la goupille de fixation (27) est pourvue d'un indicateur (29).

10. Turbosoufflante à gaz d'échappement selon l'une quelconque des revendications 1 à 9, **caractérisée en ce que** le premier dispositif de connexion (19) est réalisé à la manière d'une fermeture à baïonnette.
